# EUROPÄISCHE PATENTANMELDUNG

(11) **EP 3 002 715 A1**
(43) Veröffentlichungstag der Anmeldung: **06.04.2016**
(21) Anmeldenummer: 15187141.5
(22) Anmeldetag: 28.09.2015
(51) Int. Cl.: G06Q 10/04, G06Q 10/00, G06Q 30/00

(54) **VERFAHREN ZUM PROGNOSTIZIEREN EINER PANNE UND/ODER EINES REPARATUR- UND/ODER WARTUNGSBEDARFS**

(30) Priorität: 30.09.2014 LU 92560
(71) Anmelder: MCon Group AG, 9008 St. Gallen (CH)
(72) Erfinder: Dietrich, Christian, 65205 Wiesbaden (DE)
(74) Vertreter: Grabovac, Dalibor

(57) **Zusammenfassung**

Die Erfindung betrifft u.a. ein Verfahren zum Prognostizieren einer Panne und/oder eines Reparatur- und/oder Wartungsbedarfs an einem vorgegebenen oder vorgebbaren Fahrzeugtyp. Das Verfahren zeichnet sich dadurch aus, dass das Suchverhalten einer Vielzahl von Internetbenutzern nach Wartungs- und/oder Reparaturleistungen von einem computerbasierten System statistisch ausgewertet wird.

## Beschreibung

Die Erfindung betrifft ein Verfahren zum Prognostizieren einer Panne und/oder eines Reparatur- und/oder Wartungsbedarfs an einem vorgegebenen oder vorgebbaren Fahrzeugtyp.

Die Erfindung betrifft außerdem ein Computerprogramm mit einem Programmcode zum Ausführen eines solchen Verfahrens und ein System zum Ausführen eines solchen Verfahrens.

Bei Fahrzeugen, insbesondere bei Kraftfahrzeugen, ist es zur Erhaltung der technischen Funktionsfähigkeit unumgänglich, Wartungsarbeiten durchzuführen. Darüber hinaus ist es von Vorteil, wenn eine Beschädigung und/oder ein übermäßiger Verschleiß einer Fahrzeugkomponente rechtzeitig erkannt und repariert wird. Wird einem akuten Reparatur- und/oder Wartungsbedarf nicht nachgegangen, so erhöht sich die Wahrscheinlichkeit des Auftretens einer Panne, insbesondere auch hinsichtlich sicherheitsrelevanter Fahrzeugkomponenten.

Ein möglicher Ansatz zur Lösung dieses Problems kann darin bestehen, in regelmäßigen, mehr oder minder willkürlichen, Zeit- oder Laufleistungsetappen sämtliche oder eine Gruppe von Fahrzeugkomponenten dahingehend zu überprüfen, ob diese noch funktionstüchtig sind oder ob ein Reparatur- und/oder Wartungsbedarf besteht. Allerdings ist dieser Ansatz insbesondere wirtschaftlich wenig sinnvoll, weil unterschiedliche Fahrzeugkomponenten ganz unterschiedliche Lebensdauern aufweisen und daher stets auch Fahrzeugkomponenten überprüft werden, bei denen eine Überprüfung oder gar eine Reparatur oder ein Austausch noch gar nicht nötig wäre.

Ein anderer Ansatz beruht darauf, die zu überwachenden Fahrzeugkomponenten mit Sensoren zu versehen, sodass ein fortschreitender Verschleiß und/oder ein Wartungs- oder ein Reparaturbedarf fahrzeugkomponentenspezifisch erkannt werden kann. Allerdings ist diese Vorgehensweise technisch sehr aufwendig und im Ergebnis für den Fahrzeugerwerber teuer.

Es ist daher die Aufgabe der vorliegenden Erfindung, ein Verfahren anzugeben, mit dem sich fahrzeugtypspezifisch zuverlässig eine Panne und/oder ein Reparatur- und/oder Wartungsbedarf prognostizieren lässt.

Die Aufgabe wird durch ein Verfahren gelöst, das durch folgende Schritte gekennzeichnet ist:
a. Erfassen einer Vielzahl von Wartungs- und/oder Reparaturanfragen mittels eines computerbasierten Erfassungssytems, wobei die Wartungs- und/oder Reparaturanfragen jeweils Informationen über ein Fahrzeug und eine an diesem Fahrzeug zu erbringende Wartungs- und/oder Reparaturleistung beninhalten,
b. Untersuchen der erfassten Vielzahl von Wartungs- und/oder Reparaturanfragen nach wenigstens einer statistischen Auffälligkeit bezüglich d es, insbesondere zeitlichen, Ausfall- oder Verschleißverhaltens wenigstens eines Typs einer vorgegebenen oder vorgebbaren Fahrzeugkomponente, die auch der vorgegebene oder vorgebbare Fahrzeugtyp aufweist,
c. Ermitteln eines Zeitpunktes und/oder einer Zeitspanne und/oder einer Laufleistung, zu dem ein Ausfall oder Verschleiß der Fahrzeugkomponente wahrscheinlich ist und/oder mit einer Wahrscheinlichkeit von mehr als 50%, insbesondere von mehr als 70%, ganz insbesondere von mehr als 90% auftritt.

Alternativ wird diese Aufgabe durch ein Verfahren gelöst, das dadurch gekennzeichnet ist, dass das Suchverhalten einer Vielzahl von Internetbenutzern nach Wartungs- und/oder Reparaturleistungen von einem computerbasierten System statistisch ausgewertet wird.

Die Erfindung hat den ganz besonderen Vorteil, dass eine auf hoher Wahrscheinlichkeit beruhende, zuverlässige Aussage darüber getroffen werden kann, nach welcher Zeitspanne und/oder nach welcher Laufleistung, welche Fahrzeugkomponente einen Wartungs- und/oder Reparaturbedarf hat und/oder eine erhöhte Gefahr für eine Panne besteht.

Hierbei wird insbesondere auf die Informationen zurückgegriffen, die diejenigen, die in einem Netzwerk, insbesondere im Internet, nach einer speziellen Reparatur- oder Wartungsleistung hinsichtlich ihres Fahrzeuges suchen, machen. Es wird dabei vorteilhaft ausgenutzt, dass der Enduser, der eine konkrete Suchanfrage startet, gezwungen ist, ganz konkret den Fahrzeugtyp, insbesondere hinsichtlich Typbezeichnung, Ausstattung und Motorisierung, anzugeben und darüber hinaus präzise Angaben darüber zu machen, welche Fahrzeugkomponente einer Reparatur und/oder einer Wartung bedarf beziehungsweise welche Fahrzeugkomponenten einer Reparatur und/oder einer Wartung bedürfen.

Wenn für einen Typ einer Fahrzeugkomponente einmal festgestellt ist, zu welchen Alterungszeitpunkten und/oder bei welcher Laufleistung mit einem Verschleiß und/oder einem Ausfall zu rechnen ist, kann spezifisch für ein bestimmtes Fahrzeug, das eine Fahrzeugkomponente dieses Typs aufweist vorhergesagt werden, wann bezogen auf diese Fahrzeugkomponente ein Wartungs- und/oder Reparaturbedarf besteht und/oder wann mit einer Panne zu rechnen ist.

Aufgrund der Tatsache, dass mit der Eingabe einer verwertbaren Suchanfrage für den Endanwender auch stets etwas Mühe verbunden ist, ist davon auszugehen, dass die Eingabe von Anfragen, denen kein konkreter Bedarf zugrunde liegt und die die Datenbasis für die Auswertung verfälschen könnten, weitgehend unterbleibt. Darüber hinaus kann vorteilhaft vorgesehen sein, dass die eingegebenen Daten auf Plausibilität überprüft werden, bevor sie für eine Teilnahme an einer statistischen Auswertung freigegeben werden.

Zur Klorstellung sei angemerkt, dass im Sinne der vorliegenden Erfindung mit dem Begriff "Fahrzeug" ein konkretes, real existierendes Fahrzeug gemeint ist; beispielsweise ein Fahrzeug, bezüglich dem dessen Halter eine Wartungs- und/oder Reparaturanfrage übermittelt. Darüber hinaus sei angemerkt, dass im Sinne dieser Anmeldung mit dem Begriff "Fahrzeugtyp" eine Gruppe von Fahrzeugen gemeint ist, die mehrere Eigenschaften, insbesondere die Typbezeichnung und/oder die Motorisierung und/oder ein Ausstattungspaket und/oder wenigstens eine Ausstattungskomponente, gemeinsam haben.

Die Erfindung hat den ganz besonderen Vorteil, dass auf zusätzliche Sensoren innerhalb des Fahrzeugs zur Überwachung der Fahrzeugkomponenten verzichtet werden kann. Allerdings ist die Verwendung von Sensoren nicht grundsätzlich ausgeschlossen und durchaus möglich, insbesondere um dem Benutzer eines Fahrzeuges das Vorliegen eines Wartungs- und/oder Reparaturbedarfs anzuzeigen, den der Benutzer dann zur Grundlage einer im Sinne der vorliegenden Erfindung auswertbaren Anfrage, beispielsweise nach der günstigsten, in seiner Umgebung liegenden Werkstatt, machen kann.

Das erfindungsgemäße Verfahren arbeitet umso präziser, je mehr Wartungs- und/oder Reparaturanfragen eingeholt und anschließend ausgewertet werden können.

Bei einer vorteilhaften Ausführung werden die Informationen über ein Fahrzeug und die an diesem Fahrzeug zu erbringenden Wartungs- und/oder Reparaturleistungen in einer Datenbank gespeichert. Insbesondere kann vorteilhaft vorgesehen sein, dass das Erfassungssystem eine Datenbank aufweist, in der die Informationen über ein Fahrzeug und einer an diesem Fahrzeug zu erbringende Wartungs- und/oder Reparaturleistung, die einer entsprechenden Anfrage zu entnehmen sind, gespeichert werden.

Nach einem besonderen Erfindungsgedanken, der auch losgelöst von der oben erwähnten Erfindung realisiert sein kann, wird diesen auf einer speziellen Suchanfrage beruhenden Informationen eine Such-ID, beispielsweise ein jeweils einmalig zu vergebender, eindeutiger Code, zugeordnet, über die beispielsweise der Suchende und/oder eine von dem Suchenden ausgewählte Reparaturwerkstatt und/oder ein Autohaus auf die hinterlegten Informationen zu einem späteren Zeitpunkt zugreifen können.

Wie bereits erwähnt, ist es von besonderem Vorteil, wenn die Wartungs- und/oder Reparaturanfragen internetbasiert eingeholt werden und/oder wenn das Erfassungssystem netzwerkbasiert oder internetbasiert arbeitet. Dies insbesondere deshalb, weil über ein möglichst großes Netzwerk in kurzer Zeit eine Vielzahl von Wartungs- und/oder Reparaturanfragen eingeholt werden kann.

Wie ebenfalls bereits erwähnt, ist es von besonderem Vorteil, wenn das Erfassungssystem zur Eingabe der Wartungs- und/oder Reparaturanfragen über das Netzwerk Eingabehilfen, wie beispielsweise dem Benutzer eine Eingabeseite mit Eingabefeldern zur Verfügung stellt. Insbesondere kann vorteilhaft auch vorgesehen sein, dass das Erfassungssystem eine Variantendatenbank aufweist, aus der ein Benutzer eine für seine Wartungs- und/oder Reparaturanfrage spezifische Fahrzeug- und/oder Ausstattungsvariante und/oder einen für seine Wartungs- und/oder Reparaturanfrage spezifischen Typ einer Fahrzeugkomponente auswählen kann. Beispielsweise kann vorteilhaft vorgesehen sein, dass dem Benutzer, nachdem er die Motorvariante seines Fahrzeugs angegeben hat, ausschließlich Fahrzeugkomponenten, nämlich in diesem Fall Motorkomponenten, zur Auswahl angezeigt werden, die dieser Motorvariante zugeordnet sind, während Motorkomponenten anderer Motoren dem Benutzer nicht zur Auswahl angezeigt werden.

Bei einer besonderen Ausführung ist vorgesehen, dass eine bei einer Wartungs- und/oder Reparaturanfrage eingegebene, fahrzeugspezifische Information, insbesondere beispielsweise eine Fahrzeugidentifikationsnummer, wenigstens einer weiteren Information, insbesondere einem in einer Variantendatenbank gespeicherten Typ einer Fahrzeugkomponente und/oder einem Fahrzeugtyp zugeordnet wird.

Insbesondere kann vorteilhaft vorgesehen sein, dass das Erfassungssystem eine bei einer Wartungs- und/oder Reparaturanfrage eingegebene, fahrzeugspezifische Information automatisch weiteren Informationen, die insbesondere in einer Variantendatenbank abgelegt sein können, zuordnet. Insoweit kann vorteilhaft ausgenutzt werden, dass einer Information, wie beispielsweise der Fahrzeugidentifikationsnummer, per se bestimmte Fahrzeugeigenschaften, wie insbesondere der Fahrzeugtyp (inklusive Motorisierung und Ausstattung) zugeordnet sind. Die entsprechenden Daten sind in aller Regel beispielsweise beim Fahrzeughersteller oder bei den für die Zulassung zuständigen Behörden und anderen Institutionen gespeichert. Vorzugsweise wird auch die weitere Information beim Untersuchen nach statistischen Auffälligkeiten berücksichtigt.

Bei einer besonderen Ausführung ist vorgesehen, dass die Informationen fahrzeugtypübergreifend ausgewertet werden, um beispielsweise für eine bestimmte Fahrzeugkomponente, die in unterschiedlichen Fahrzeugtypen verbaut ist, spezifische Informationen hinsichtlich eines Zeitpunktes und/oder einer Zeitspanne und/oder einer Laufleistung, zu dem ein Ausfall oder Verschleiß der Fahrzeugkomponente wahrscheinlich ist, zu erhalten. Hierbei kann beispielsweise berücksichtigt werden, dass beispielsweise ein und derselbe Motor, in ganz unterschiedlichen Fahrzeugtypen - gegebenenfalls sogar Fahrzeugtypen unterschiedlicher Hersteller - verbaut worden sein kann. Insoweit kann in vorteilhafter Weise auch eine fahrzeugtypübergreifende und/oder herstellerübergreifende Auswertung der zur Verfügung stehenden Daten erfolgen, was die Präzision der Prognose wesentlich erhöht, da bezogen auf einen Fahrzeugkomponententyp jeweils eine wesentlich größere Anzahl von Daten zur Verfügung steht.

Die Erfindung macht sich in vorteilhafter Weise zu Nutze, dass einzelne Fahrzeugkomponenten, ganz insbesondere Verschleißteile, in aller Regel eine sehr spezifische Lebensdauer und/oder Laufleistung aufweisen und diese durch statistische Auswertung einer Vielzahl von Wartungs- und/oder Reparaturanfragen identifiziert werden können. Beispielsweise fällt es bei einer statistischen Auswertung auf, wenn eine Vielzahl von Fahrzeughaltern, deren Fahrzeuge hinsichtlich der Motorisierung identisch sind, bezogen auf ihre Fahrzeuge zumeist nach einer Laufleistung von 140.000 bis 150.000 Kilometern nach einer Werkstatt zur Wartung der Steuerkette suchen. In einem solchen Fall ist beispielsweise davon auszugehen, dass bezogen auf diese Motorvariante im Bereich der angegebenen Laufleistung mit hoher Wahrscheinlichkeit mit einem Ausfall der Steuerkette oder zumindest mit einem Wartungsbedarf an der Steuerkette gerechnet werden kann.

Analog fällt es bei einer statistischen Auswertung beispielsweise auf, wenn mehrere Fahrzeughalter auf der Suche nach einem neuen Auspuff angeben, dass deren Fahrzeug ein Alter von 6 bis 6 ½ Jahren aufweist. Diese Information ausnutzend kann beispielsweise einem Halter eines Fahrzeugs dieses Typs, dessen Fahrzeug 6 Jahre alt ist, die konkrete Information gegeben werden, dass ein Ausfall seines Auspuffs innerhalb des nächsten halben Jahres mit hoher Wahrscheinlichkeit zu Erwarten ist.

Nach einem besonderen Erfindungsgedanken kann die Information über den Ermittelten Zeitpunkt und/oder die ermittelte Laufleistung alternativ oder zusätzlich auch an eine Werkstatt weitergegeben werden, damit diese einem Werkstattbesucher - gegebenenfalls vollkommen unabhängig vom eigentlichen Grund des Werkstattbesuchs - zusätzliche Angebote für zusätzliche Wartungs- und/oder Reparaturleistungen machen kann.

Bei einer besonderen Ausführung des Verfahrens ist vorgesehen, dass das Untersuchen der eingeholten Informationen ein fahrzeugkomponentenspezifisches Bilden von Fahrzeuggruppen beinhaltet. Beispielsweise können Fahrzeuggruppen zum Zwecke der statistischen Auswertung gebildet werden, die wenigstens einen Typ von Fahrzeugkomponente gemeinsam haben.

Wie bereits erwähnt, kann vorteilhaft vorgesehen sein, dass dem Ausfall- oder Verschleißverhalten des wenigstens einen Typs einer vorgegebenen oder vorgebbaren Fahrzeugkomponente eines bestimmten Fahrzeugs ein Reparatur- und/oder Wartungsbedarf zugeordnet wird.

Bei einer besonderen Ausführung ist vorgesehen, dass auf der Basis der ermittelten Prognose für ein konkretes Fahrzeug ein spezifisches Angebot - insbesondere bezogen auf eine bestimmte Reparaturwerkstatt - für eine Reparatur- und/oder Wartungsleistung erstellt wird. Darüber hinaus kann vorteilhaft vorgesehen sein, dass das spezifische Angebot an einen dem bestimmten Fahrzeug zugeordneten Endkunden und/oder an eine Werkstatt übermittelt wird. Das Übermitteln an die Werkstatt hat den Vorteil, dass diese dem Endkunden das Angebot unterbreiten kann, wenn der Endkunde die Werkstatt aufsucht. Beispielsweise wenn ein Endkunde die Werkstatt wegen des Tauschens der Sommerreifen gegen Winterreifen aufsucht, besteht für die Werkstatt dann die Möglichkeit, dem Endkunden zusätzlich das spezifische Angebot unter Hinweis auf die erstellte Prognose unterbreiten zu können. Um bei dem obigen Beispiel zu bleiben: Beispielsweise kann die Werkstatt den Fahrzeughalter darauf hinweisen, dass ein Ausfall seines Auspuffsystems innerhalb des nächsten halben Jahres absehbar ist und entsprechend einen baldigen Austausch empfehlen.

Insoweit kann insbesondere vorteilhaft vorgesehen sein, dass eine ermittelte Prognose an ein, vorzugsweise computergestütztes, System zum Erfassen der zum Abschluss und zur Durchführung eines Wartungs- und/oder Reparaturvertrages betreffend ein Fahrzeug, insbesondere ein Kraftfahrzeug, erforderlichen Informationen übermittelt wird und vorzugsweise einem ganz bestimmten Fahrzeug zugeordnet wird.

Das System zum Erfassen von Daten bezüglich eines Wartungs- und/oder eines Reparaturbedarfs an einem Fahrzeug, insbesondere an einem Kraftfahrzeug, kann insbesondere einen mobiles Endgerät, insbesondere Tablet-Computer oder PDA oder Smartphone oder Computer mit Touchscreen, aufweisen, wobei der Servicemitarbeiter der Reparaturwerkstatt mit dem mobilen Endgerät in der Hand den Kunden unmittelbar am Fahrzeug betreuen kann und dort die gesamte Dialogannahme durchführen kann und insbesondere sämtliche zum Abschluss und zur Durchführung eines Wartungs- und/oder Reparaturauftrags an dem Fahrzeug erforderlichen Informationen zuverlässig, präzise und vollständig erfassen kann. Wenn ihm auf dem mobilen Endgerät zusätzlich eine oder mehrere der erfindungsgemäß ermittelten Prognosen und/oder entsprechende Angebote in Bezug auf das Fahrzeug des Kunden, den er gerade berät, angezeigt werden, kann der Servicemitarbeiter dem Kunden diesbezüglich unmittelbar zusätzliche Wartungs- und Reparaturleistungen auf der Basis der vorliegenden Prognose empfehlen zu können und/oder ein entsprechendes Angebot für eine Wartungs- und/oder Reparaturleistung unmittelbar unterbreiten zu können, wenn die Prognose und/oder ein entsprechendes Angebot an das mobile Endgerät, beispielsweise einen Tablet-Computer, übertragen werden.

Ein dermaßen ausgerüstetes mobiles Endgerät kann von dem Servicemitarbeiter, der in der Werkstatt einen Reparaturauftrag entgegen nimmt, in der Weise genutzt werden, dass er mit dem Kunden zusammen das Fahrzeug besichtigen und dennoch auf wichtige Daten zurückgreifen, beziehungsweise die aufzunehmenden Daten unmittelbar eingeben kann.

Analog ist es - alternativ oder zusätzlich - auch möglich, die Prognose, die einem bestimmten Fahrzeug zugeordnet ist, an ein System zum Unterstützen und/oder Abwickeln eines Fahrzeugverkaufs zu übertragen. So kann beispielsweise der Verkäufer in einem Autohaus Informationen über bevorstehende Wartungs- und/oder Reparaturarbeiten und/oder Pannen an einem Kundenfahrzeug erhalten, dem an einem Neufahrzeug oder einem Gebrauchtfahrzeug interessierten Kunden mitteilen und beispielsweise im Einzelfall darauf hinweisen, dass der Erwerb eines Neufahrzeugs oder eines Gebrauchsfahrzeugs aus wirtschaftlichen Gründen günstiger sein kann, als ein vorhandenes Fahrzeug angesichts der für die Wartung und/oder Reparatur zu erwartenden Kosten weiter zu betreiben.

Das System zum Unterstützen und/oder Abwickeln von Fahrzeugverkäufen kann ebenfalls auf der Basis eines mobilen Endgerätes, insbesondere eines Tablet-Computers, implementiert sein, was es dem Verkäufer ermöglicht, den Kunden beispielsweise direkt bei in Augenscheinnahme eines Vorführwagens und/oder bei einer Probefahrt zu betreuen und insbesondere die spezifischen Informationen hinsichtlich eines Neufahrzeugs oder eines Gebrauchtfahrzeugs und insbesondere Informationen hinsichtlich eines prognostizierten Wartungs- und/oder Reparaturbedarfs am Altfahrzeug des Kunden geben zu können.

Insbesondere um in einem Autohaus zusätzliche Wartungs- und/oder Reparaturleistungen anbieten zu können, ist es von Vorteil, wenn einer, insbesondere über ein Netzwerk und/oder das Internet erfolgten, Suchanfrage nach einer Wartungs- und/oder Reparaturleistung in Bezug auf ein Fahrzeug eine, insbesondere unter Berücksichtigung der Laufleistung und/oder des Alters des Fahrzeugs, spezifisch für den Fahrzeugtyp, zu dem das Fahrzeug gehört, ermittelte Prognose zugeordnet und zusammen mit wenigstens einem Detail der Suchabfrage abgespeichert wird. Auf diese Weise ist es ermöglicht, dass ein Kunde, der eine Werkstatt aufsucht, um die in seiner Suchanfrage formulierten Wartungs- und/oder Reparaturarbeiten durchführen zu lassen, direkt zusätzliche Wartungs- und/oder Reparaturarbeiten angeboten werden können.

Allerdings ist dies, nach einem eigenständigen Erfindungsgedanken - auch unabhängig von der oben beschriebenen Art und Weise der Erstellung einer Prognose - möglich, wenn Informationen hinsichtlich eines anstehenden Reparatur- und/oder Wartungsbedarfs auf andere Weise beschafft werden können. Beispielsweise kann diesbezüglich vorgesehen sein, dass Fahrzeuge mit einer Vielzahl von Sensoren ausgerüstet sind, die Daten hinsichtlich Verschleißzustands an eine zentrale Datensammelstelle, die beispielsweise beim Fahrzeughersteller angeordnet sein kann, melden. Beispielsweise können die Daten drahtlos, insbesondere über eine GSM-Verbindung, übertragen werden. Hierbei kann vorteilhaft ausgenutzt werden, dass der Gesetzgeber ohnehin zum Ermöglichen des Absetzens eines automatischen Notrufs vorgeschrieben hat, dass Fahrzeuge künftig mit entsprechenden Kommunikationsmodulen ausgerüstet sein müssen. Diese Kommunikationsmodule können auch zum Übertragen von Informationen bezüglich des Verschleißzustandes von Fahrzeugkomponenten genutzt werden. Insoweit können beispielsweise auch auf diese Weise beschaffte Informationen - alternativ oder zusätzlich - zu denen, die durch Auswerten von Suchanfragen gewonnen wurden, einer konkreten Suchanfrage, wie beispielsweise einer Information über den Fahrzeughalter und/oder einer Information über das Fahrzeug und/oder einer Information über die Werkstatt zugeordnet werden. Dies, wie oben ausführlich beschrieben, beispielsweise um dem Fahrzeughalter im Autohaus zusätzliche Wartungs- und/oder Reparaturleistungen anbieten zu können.

Von besonderem Vorteil ist ein Computerprogramm mit einem Programmcode zum Ausführen des erfindungsgemäßen Verfahrens, wenn das Computerprogramm auf einem Computer ausgeführt wird.

Von ganz besonderem Vorteil ist ein System, das ein computerbasiertes Erfassungssystem aufweist, das über ein Netzwerk, insbesondere über das Internet, mit einem Computer des Benutzers verbindbar ist und auf diesem Computer eine Eingabeseite zur Verfügung stellt, die zur Eingabe einer fahrzeugspezifischen Wartungs- und/oder Reparaturanfrage ausgebildet und bestimmt ist, wobei das System zur programmgesteuerten Ausführung des erfindungsgemäßen Verfahrens ausgebildet ist.

Darüber hinaus kann vorteilhaft vorgesehen sein, dass das System dazu ausgebildet ist, mit einem computergestützten System zum Erfassen der zum Abschluss und zur Durchführung eines Wartungs- und/oder Reparaturvertrages betreffend ein Fahrzeug, insbesondere ein Kraftfahrzeug, erforderlichen Informationen und/oder einem System durchführen einer Dialogannahme und/oder mit einem System zum computergestützten Unterstützen und/oder Abwickeln des Anbietens und Verkaufs eines Fahrzeugs übermittelt wird.

In der Zeichnung ist der Erfindungsgegenstand schematisch dargestellt und wird anhand der Figuren nachfolgend beschrieben, wobei gleiche oder gleich wirkende Elemente zumeist mit denselben Bezugszeichen versehen sind. Dabei zeigen:
- Fig. 1: ein Ausführungsbeispiel eines Ablaufdiagramms eines erfindungsgemäßen Verfahrens, und
- Fig. 2: schematisch ein Ausführungsbeispiel eines erfindungsgemäßen Systems.

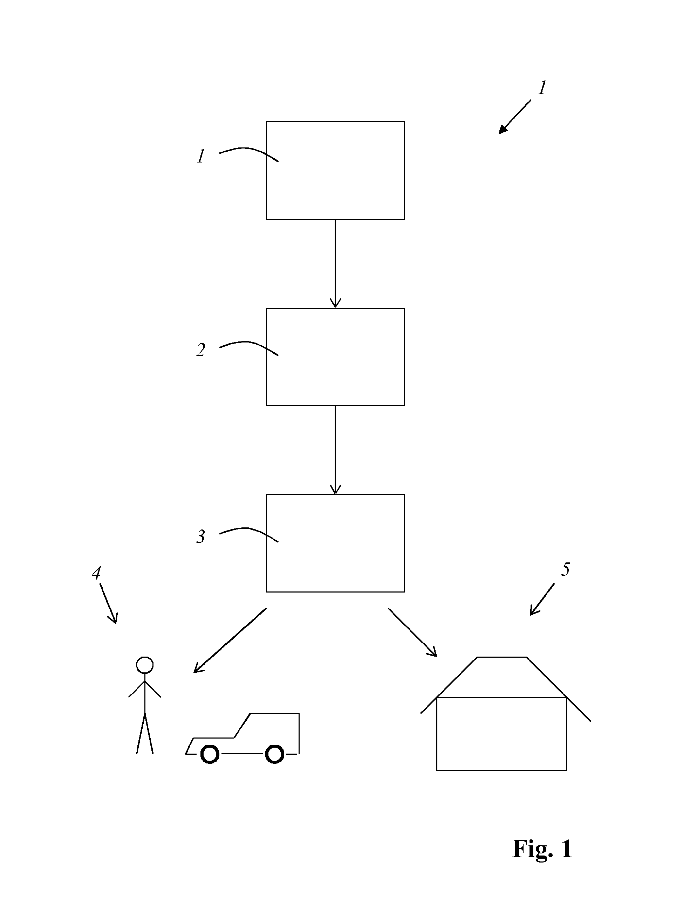

Figur 1 zeigt ein Ausführungsbeispiel eines Ablaufdiagramms bezogen auf eine mögliche Ausführungsform eines erfindungsgemäßen Verfahrens.

Das Verfahren beinhaltet den Schritt des Erfassens 1 einer Vielzahl von Wartungs- und/oder Reparaturanfragen mittels eines computerbasierten Erfassungssystems. Hierbei beinhalten die Wartungs- und/oder Reparaturanfragen jeweils Informationen über ein Fahrzeug und eine an diesem Fahrzeug zu erbringende Wartungs- und/oder Reparaturleistung. Die beim Erfassen 1 einer Vielzahl von Wartungs- und/oder Reparaturanfragen anfallenden Daten können vorteilhaft in einer Datenbank gespeichert werden.

In einem nächsten Schritt erfolgt das Untersuchen 2 der erfassten Vielzahl von Wartungs- und/oder Reparaturanfragen nach wenigstens einer statistischen Auffälligkeit bezüglich des Ausfall- und/oder Verschleißverhaltens wenigstens eines Typs einer vorgegebenen oder vorgebbaren Fahrzeugkomponente, die auch der vorgegebenen oder vorgebbare Fahrzeugtyp, zu dem eine Prognose erstellt werden soll, aufweist.

In einem nächsten Schritt erfolgt das Ermitteln 3 eines Zeitpunktes und/oder einer Zeitspanne und/oder einer Laufleistung, zu dem bzw. zu der ein Ausfall oder ein Verschleiß des Typs der Fahrzeugkomponente wahrscheinlich ist und/oder mit einer Wahrscheinlichkeit von mehr als 50%, insbesondere von mehr als 70%, ganz insbesondere von mehr als 90%, auftritt.

Das Verfahren kann in der Weise ausgeführt werden, dass während des Untersuchens 2 der erfassten Vielzahl von Wartungs- und/oder Reparaturanfragen und während des Ermittelns 3 fortlaufend weitere Wartungs- und/oder Reparaturanfragen erfasst werden. Auf diese Weise ist es ermöglicht, die Präzision künftiger Prognosen fortlaufend weiter zu erhöhen, weil eine größere Datenmenge für das Untersuchen 2 und für das Ermitteln 3 zur Verfügung steht.

Wenn für einen Typ einer Fahrzeugkomponente einmal festgestellt ist, zu welchen Alterungszeitpunkten und/oder bei welcher Laufleistung mit einem Verschleiß und/oder einem Ausfall zu rechnen ist, kann spezifisch für ein bestimmtes Fahrzeug, das eine Fahrzeugkomponente dieses Typs aufweist vorhergesagt werden, wann bezogen auf diese Fahrzeugkomponente ein Wartungs- und/oder Reparaturbedarf besteht und/oder wann mit einer Panne zu rechnen ist.

Wenn beispielsweise auf Grund des Untersuchens 2 der Vielzahl von Wartungs- und/oder Reparaturanfragen und des Ermitteins 3 herausgefunden wurde, dass bei einem bestimmten Fahrzeugtyp der Stoßdämpfer eines bestimmten Stoßdämpfertyps statistisch gesehen nach einer Laufleistung im Bereich von 100.000 bis 110.000 Kilometern verschlissen ist, kann dem Fahrer eines Fahrzeuges dieses Typs, das genau diesen Typ von Stoßdämpfer aufweist und das bereits eine Laufleistung von 100.000 Kilometer auf dem Tacho hat, mitgeteilt werden, dass an seinem Stoßdämpfer mit sehr hoher Wahrscheinlichkeit ein Wartungs- und/oder Reparaturbedarf besteht. Alternativ oder zusätzlich kann diese Information auch an eine Werkstatt 5 des Fahrzeughalters 4 übermittelt werden, damit diese ihm ein entsprechendes Angebot zum Erbringen einer diesbezüglichen Wartungs- und/oder Reparaturleistung machen kann.

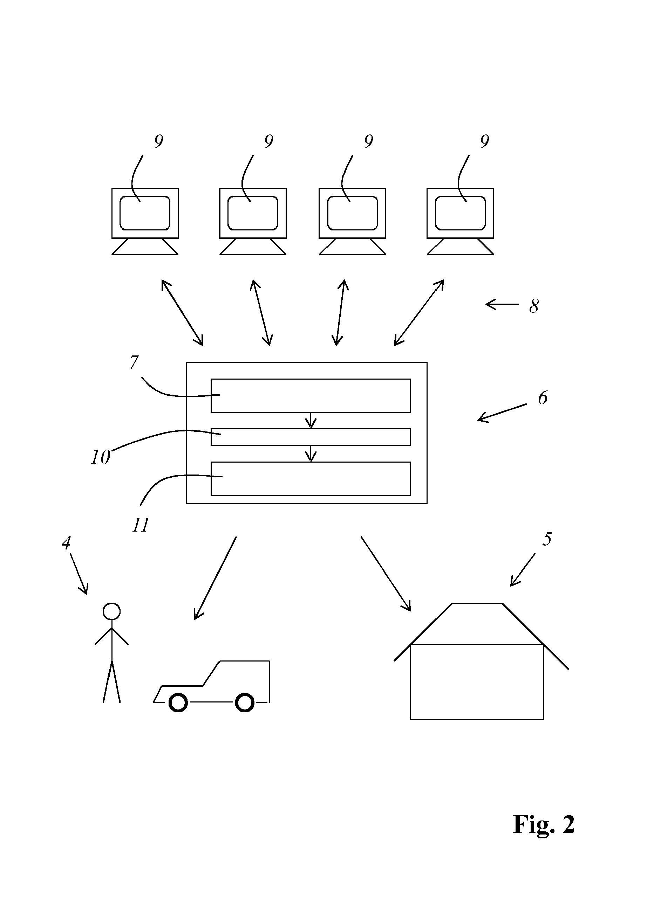

Figur 2 zeigt schematisch ein Ausführungsbeispiel eines erfindungsgemäßen Systems 6, das ein computerbasiertes Erfassungssystem 7 aufweist. Das computerbasierte Erfassungssystem 7 ist dazu ausgebildet und bestimmt, über ein Netzwerk 8, insbesondere über das Internet, mit den Computern 9 von Endnutzern, insbesondere von Fahrzeughaltern 4, verbunden zu werden und auf diesen Computern 9 jeweils eine Eingabeseite zur Verfügung zu stellen, die zur Eingabe einer fahrzeugspezifischen Wartungs- und/oder Reparaturanfrage ausgebildet und bestimmt ist.

Die Informationen, die ein Endnutzer eingibt und die vorzugsweise Informationen über ein Fahrzeug und eine an diesem Fahrzeug zu erbringende Wartungs- und/oder Reparaturleistung beinhalten, werden an das Erfassungssystem 7 übermittelt und in einer Datenbank 10 gespeichert. Insoweit beinhalten die Daten Informationen über das Suchverhalten einer Vielzahl von Internetbenutzern nach Wartungs- und/oder Reparaturleistungen.

Die in der Datenbank 10 gespeicherten Informationen werden anschließend in einem Auswertemodul 11 des Systems 6 nach statistischen Auffälligkeiten untersucht. Insbesondere kann vorteilhaft vorgesehen sein, dass die Daten nach wenigstens einer statistischen Auffälligkeit bezüglich des Ausfall- oder Verschleißverhaltens wenigstens eines Typs einer vorgegebenen oder vorgebbaren Fahrzeugkomponente untersucht werden.

Das Prognoseergebnis kann von dem System an einen Fahrzeughalter 4, der ein Fahrzeug mit einer Fahrzeugkomponente aufweist, zu der die Prognose erstellt wurde, übermittelt werden. Alternativ oder zusätzlich kann auch vorgesehen sein, dass das Prognoseergebnis an eine Reparaturwerkstatt 5 übermittelt wird. Alternativ oder zusätzlich kann das Prognoseergebnis insbesondere an ein, vorzugsweise computergestütztes, insbesondere Tablet-Computer-basiertes, System zum Erfassen der zum Abschluss und zur Durchführung eines Wartungs- und/oder Reparaturvertrages betreffend ein Fahrzeug, insbesondere ein Kraftfahrzeug, erforderlichen Informationen, insbesondere einem System zur Tablet-Computer-basierten Dialogannahme in einer Werkstatt, übermittelt werden.

Darüber hinaus kann vorteilhaft vorgesehen sein, dass das Prognoseergebnis an ein computerbasiertes, insbesondere Tablet-Computer-basiertes, Verkaufssystem übermittelt wird, damit der Verkäufer in einem Autohaus unmittelbar auf die Daten bezüglich des Wartungs- und/oder Reparaturbedarfs eines Altfahrzeugs eines potenziellen Kunden für ein Neufahrzeug oder ein Gebrauchtfahrzeug zurückgreifen kann. Dies insbesondere, um den Kunden beispielsweise darauf hinzuweisen, dass der Weiterbetrieb eines Altfahrzeugs im Vergleich zur Anschaffung eines Neuwagens wirtschaftlich nicht sinnvoll ist.

### Bezugszeichenliste:

- 1: Erfassen
- 2: Untersuchen
- 3: Ermitteln
- 4: Fahrzeughalter
- 5: Werkstatt
- 6: System
- 7: Erfassungssystem
- 8: Netzwerk
- 9: Computer
- 10: Datenbank
- 11: Auswertemodul

## Patentansprüche

1. Verfahren zum Prognostizieren einer Panne und/oder eines Reparatur- und/oder Wartungsbedarfs an einem vorgegebenen oder vorgebbaren Fahrzeugtyp, **gekennzeichnet durch** folgende Schritte:
a. Erfassen einer Vielzahl von Wartungs- und/oder Reparaturanfragen mittels eines computerbasierten Erfassungssytems, wobei die Wartungs- und/oder Reparaturanfragen jeweils Informationen über ein Fahrzeug und eine an diesem Fahrzeug zu erbringende Wartungs- und/oder Reparaturleistung beninhalten,
b. Untersuchen der erfassten Vielzahl von Wartungs- und/oder Reparaturanfragen nach wenigstens einer statistischen Auffälligkeit bezüglich des, insbesondere zeitlichen und/oder laufleistungsabhängigen, Ausfall- oder Verschleißverhaltens wenigstens eines Typs einer vorgegebenen oder vorgebbaren Fahrzeugkomponente, die auch der vorgegebene oder vorgebbare Fahrzeugtyp aufweist,
c. Ermitteln eines Zeitpunktes und/oder einer Zeitspanne und/oder einer Laufleistung, zu dem ein Ausfall oder Verschleiß des Typs der Fahrzeugkomponente wahrscheinlich ist und/oder mit einer Wahrscheinlichkeit von mehr als 50%, insbesondere von mehr als 70%, ganz insbesondere von mehr als 90%, auftritt.

2. Verfahren zum Prognostizieren einer Panne und/oder eines Reparatur- und/oder Wartungsbedarfs an einem vorgegebenen oder vorgebbaren Fahrzeugtyp, **dadurch gekennzeichnet, dass** das Suchverhalten einer Vielzahl von Internetbenutzern nach Wartungs- und/oder Reparaturleistungen von einem computerbasierten System statistisch ausgewertet wird.

3. Verfahren nach Anspruch 1 oder 2, **dadurch gekennzeichnet, dass**
a. Informationen über ein Fahrzeug und eine an diesem Fahrzeug zu erbringende Wartungs- und/oder Reparaturleistung in eine Datenbank gespeichert werden, und/oder dass
b. das Erfassungssystem eine Datenbank aufweist, in der die Informationen über ein Fahrzeug und eine an diesem Fahrzeug zu erbringende Wartungs- und/oder Reparaturleistung gespeichert werden.

4. Verfahren nach einem der Ansprüche 1 bis 3, **dadurch gekennzeichnet, dass**
a. die Wartungs- und/oder Reparaturanfragen internetbasiert eingeholt werden, und/oder dass
b. das Erfassungssystem netzwerkbasiert oder internetbasiert arbeitet und/oder dass
c. das Erfassungssystem über ein Netzwerk, insbesondere über das Internet, mit einem Computer eines Benutzers verbindbar ist und auf diesem Computer eine Eingabeseite zur Verfügung stellt, die zur Eingabe einer fahrzeugspezifischen Wartungs- und/oder Reparaturanfrage ausgebildet und bestimmt ist, und/oder dass
d. das Erfassungssystem eine Variantendatenbank aufweist, aus der ein Benutzer eine für seine Wartungs- und/oder Reparaturanfrage spezifische Fahrzeug- und/oder Ausstattungsvarianten und/oder einen für seine Wartungs- und/oder Reparaturanfrage spezifischen Typ einer Fahrzeugkomponente auswählen kann.

5. Verfahren nach einem der Ansprüche 1 bis 4, **dadurch gekennzeichnet, dass**
a. eine bei einer Wartungs- und/oder Reparaturanfrage eingegebene, fahrzeugspezifische Information, insbesondere eine Fahrzeugidentifikationsnummer, wenigstens einer weiteren Information, insbesondere einem in einer Variantendatenbank gespeicherten Typ einer Fahrzeugkomponente und/oder einem Fahrzeugtyp und/oder einer Ausstattungsvariante zuordnet wird, und/oder dass
b. das Erfassungssystem eine bei einer Wartungs- und/oder Reparaturanfrage eingegebene, fahrzeugspezifische Information, insbesondere eine Fahrzeugidentifikationsnummer, automatisch wenigstens einer weiteren Information, insbesondere einem in einer Variantendatenbank gespeicherten Typ einer Fahrzeugkomponente und/oder einem Fahrzeugtyp und/oder einer Ausstattungsvariante, zugeordnet.

6. Verfahren nach Anspruch 5, **dadurch gekennzeichnet, dass**
a. die zugeordnete weitere Information in der Datenbank gespeichert wird und/oder dass
b. die zugeordnete weitere Information bei dem Untersuchen nach statistischen Auffälligkeiten berücksichtigt wird.

7. Verfahren nach einem der Ansprüche 1 bis 6, **dadurch gekennzeichnet, dass** das Untersuchen ein fahrzeugkomponentenspezifisches Bilden von Fahrzeuggruppen beinhaltet.

8. Verfahren nach einem der Ansprüche 1 bis 7, **dadurch gekennzeichnet, dass** dem Ausfall- oder Verschleißverhalten des wenigstens eines Typs einer vorgegebenen oder vorgebbaren Fahrzeugkomponente eines bestimmten Fahrzeugs ein Reparatur- und/oder Wartungsbedarf zugeordnet wird.

9. Verfahren nach Anspruch 8, **dadurch gekennzeichnet, dass**
a. auf der Basis der ermittelten Prognose für das bestimmte Fahrzeug ein spezifisches Angebot für eine Reparatur- und/oder Wartungsleistung erstellt und an einen dem bestimmten Fahrzeug zugeordneten Endkunden und/oder an eine Werkstatt übermittelt wird, und/oder dass
b. auf der Basis der ermittelten Prognose für das bestimmte Fahrzeug ein spezifisches Angebot für eine Reparatur- und/oder Wartungsleistung erstellt und an einen dem bestimmten Fahrzeug zugeordneten Endkunden und/oder an eine Werkstatt über ein Netzwerk oder über das Internetübermittelt wird.

10. Verfahren nach Anspruch 8 oder 9, **dadurch gekennzeichnet, dass**
a. eine ermittelte Prognose an ein, vorzugsweise computergestütztes, System zum Erfassen von Daten bezüglich eines akuten Wartungs- und/oder Reparaturbedarfs an Fahrzeugen übermittelt wird und/oder dass
b. eine ermittelte Prognose an ein, vorzugsweise computergestütztes, System zum Erfassen von Daten bezüglich eines akuten Wartungs- und/oder Reparaturbedarfs an Fahrzeugen übermittelt und einem bestimmten Fahrzeug zugeordnet wird, und/oder dass
c. eine ermittelte Prognose an ein, vorzugsweise computergestütztes, System zum computergestützten Steuern des Anbietens und Verkaufens eines Fahrzeugs übermittelt wird, und/oder
d. eine ermittelte Prognose an ein, vorzugsweise computergestütztes, System zum computergestützten Steuern des Anbietens und Verkaufens eines Fahrzeugs übermittelt und einem bestimmten Fahrzeug zugeordnet wird.

11. Verfahren nach einem der Ansprüche 1 bis 10, **dadurch gekennzeichnet, dass** einer, insbesondere über ein Netzwerk und/oder das Internet erfolgten, Suchanfrage nach einer Wartungs- und/oder Reparaturleistung in Bezug auf ein Fahrzeug eine, insbesondere unter Berücksichtigung der Laufleistung und/oder des Alters des Fahrzeuges, spezifisch für den Fahrzeugtyp, zu dem das Fahrzeug gehört, ermittelte Prognose zugeordnet und zusammen mit wenigstens einem Detail der Suchanfrage abgespeichert wird.

12. Verfahren, bei dem einer, insbesondere über ein Netzwerk und/oder das Internet erfolgten, Suchanfrage nach einer Wartungs- und/oder Reparaturleistung in Bezug auf ein Fahrzeug eine unter Berücksichtigung der Laufleistung und/oder des Alters des Fahrzeuges, spezifisch für den Fahrzeugtyp, zu dem das Fahrzeug gehört, insbesondere nach einem Verfahren nach einem der Ansprüche 1 bis 11, ermittelte Prognose bezüglich des Auftretens einer Panne und/oder eines Reparatur- und/oder Wartungsbedarfs zugeordnet und zusammen mit wenigstens einem Detail der Suchanfrage abgespeichert wird.

13. Computerprogramm mit einem Programmcode zum Ausführen eines Verfahrens nach einem der Ansprüche 1 bis 12, wenn das Computerprogramm auf einem Computer ausgeführt wird.

14. System, das ein computerbasiertes Erfassungssystem aufweist, das über ein Netzwerk, insbesondere über das Internet, mit einem Computer eines Benutzers verbindbar ist und auf diesem Computer eine Eingabeseite zur Verfügung stellt, die zur Eingabe einer fahrzeugspezifischen Wartungs- und/oder Reparaturanfrage ausgebildet und bestimmt ist, wobei das System zur programmgesteuerten Ausführung eines Verfahrens nach einem der Ansprüche 1 bis 12 ausgebildet ist.
